# FASCICULE DE BREVET EUROPEEN

(11) **EP 1 442 936 B1**
(45) Date de publication et mention de la délivrance du brevet: **15.07.2009**
(21) Numéro de dépôt: 03290521.8
(22) Date de dépôt: 04.03.2003
(51) Int. Cl.: B60R 7/04, B60R 11/02, A45C 11/24

(54) **Mallette de réception pour un ensemble audio-vidéo comprenant une console électronique, genre lecteur vidéo ou console de jeu, et l'écran indépendant associé**
Kasten zum Unterbringen einer Audio-Video-Einheit mit einer elektronischen Konsole wie z.B. Videolesegerät oder Spielkonsole und einem zugehörigem nicht integrierten Bildschirm
Case for receiving an audio-video-unit including an electronic console like a video player or a game machine and an associated independent screen

(30) Priorité: 28.01.2003 FR 0300937
(43) Date de publication de la demande: 04.08.2004
(73) Titulaire: SEVIC SYSTEM AG, 56564 Neuwied (DE)
(72) Inventeur: Albert, Pascal, 8077 Bettange (LU); Mei Chi, Liu, 4970 Bettange sur Mess (LU)
(74) Mandataire: Dennemeyer, John James

(56) Documents cités:
- WO-A-02/073964
- US-A- 4 635 110
- US-A- 5 177 665
- US-A1- 2002 101 726
- US-B1- 6 216 927

## Description

La présente invention concerne un contenant en forme de mallette ou de sacoche destinée à la réception d'un ensemble vidéo constitué d'une console électronique, telle qu'un lecteur DVD, SVCD, VCD, une console de jeu ou autre, et de l'écran indépendant associé, de type écran à cristaux liquides, cathodique, à plasma ou autre, lequel contenant est apte à être fixé sur la face arrière d'un siège ; l'invention concerne également l'installation vidéo complète constituée de cette mallette ou sacoche équipée de la console électronique et de l'écran associé.

Les structures de mallettes ou de sacoches destinées à la réception d'ensembles vidéo sont traditionnellement constituées de deux parties de rangement, munies de moyens qui permettent un verrouillage amovible de ladite structure en position fermée ; l'une desdites parties de rangement est adaptée pour réceptionner l'écran vidéo, avec sa face frontale visible lorsque la mallette est en position ouverte, et l'autre desdites parties de rangement est adaptée pour réceptionner la console électronique associée. Cette mallette comporte en outre - des moyens de connexion de ladite console électronique et dudit écran à une source d'énergie électrique, ainsi que - des moyens de connexion audio-vidéo entre ladite console et ledit écran.

Cette structure portable, associée à un siège, comporte son écran vidéo au niveau de la face arrière de la partie dossier. Cette position offre un angle de visionnage limité, ce qui a amené à développer des structures rapportées comportant un réceptacle pour l'écran, et destinées à positionner ledit écran sur la face arrière de la partie appui-tête.
Ces structures obligent l'utilisateur à manipuler l'écran pour le sortir de la structure de mallette ou de sacoche ; un ensemble de câblage externe doit également être mis en place pour l'alimentation de l'écran, et pour assurer la liaison audio-vidéo entre ledit écran en position externe et la console électronique restant dans la structure de mallette ou de sacoche.

Des exemples de dispositifs de réception pour ensemble vidéo de ce type sont décrits dans les documents US-A-4 635 110 et US-A-5 177 665.

US-A-2002/101 726 décrit une mallette pour une unité visuelle adaptée pour être fixé entre deux sièges de véhicule en l'attachant par systèmes de sangles.

WO-A-02 073 964 décrit un système audio-visuel fixé à l'appui-tête par un système de courroie (66) ou une housse (60).

Le document US-B1-6 216 927 décrit une mallette de réception pour un ensemble vidéo selon le préambule de la revendication 1. En particulier, ce document montre une mallette de réception pour un ensemble vidéo comprenant une console électronique, genre lecteur vidéo ou console de jeux, et l'écran indépendant associé , destinée à être fixée sur la face arrière d'un siège, laquelle mallette comprend une partie de rangement adaptée pour réceptionner ledit écran, avec sa face frontale visible lorsque la mallette est en position ouverte, une partie de rangement adaptée pour réceptionner ladite console électronique, et un système d'accrochage qui permet le maintien de la mallette contre la face arrière dudit siège, les parties de rangement étant chacune associées à des moyens qui permettent leur verrouillage amovible en position fermée, les parties de rangement étant reliées par un système de charnière, ladite mallette comprenant en outre au moins une prise de connexion d'alimentation, aménagée sur l'une desdites parties de rangement à partir de laquelle s'étend un câblage interne d'alimentation destiné à être connecté sur ledit écran et ladite console et un système de câblage interne pour la liaison audio-vidéo entre ladite console et ledit écran.

La présente invention vise a remédier aux inconvénients exposés ci-dessus en proposant une structure de réception originale en forme de mallette ou de sacoche destinée a être fixée directement sur la partie appui-tête du siège, pour obtenir un angle de visionnage optimal sans nécessiter de structure de réception rapportée tout en facilitant la mise en place de son alimentation.

Ces buts ainsi que d'autres sont atteints, suivant l'invention, par une nouvelle mallette de réception pour un ensemble vidéo ayant les caractéristiques de la partie caractérisante de la revendication 1.

Conformément à la présente invention, cette mallette de réception pour ensemble vidéo est caractérisée par le fait que le système d'accrochage consiste en une housse d'appui-tête adapté pour permettre le maintien de la face externe de la partie de rangement adaptée pour réceptionner l'écran plaquée contre la face arrière de la partie appui-tête dudit siège, et en ce que la mallette comporte une poche complémentaire destinée à permettre le rangement de la housse d'appui-tête, ladite poche complémentaire étant aménagée sur ladite face externe de la partie de rangement et obturée par un volet de fermeture .

Par « système d'accrochage », on entend notamment tout moyen permettant une solidarisation amovible de la mallette de réception sur la face arrière de la partie appui-tête du siège ; ce système d'accrochage peut être monobloc avec la mallette, mais il peut aussi consister en un système d'accrochage rapporté à ladite mallette.

Selon une forme de réalisation, la mallette comprend une première partie de rangement adaptée pour réceptionner l'écran, qui est solidaire d'une seconde partie adaptée pour réceptionner la console électronique par un moyen de liaison amovible autorisant une désolidarisation de ces deux parties.

Selon une autre forme de réalisation possible, la mallette comprend deux parties de rangement juxtaposées, formant un espace de rangement unique destiné à contenir la console électronique et l'écran associé attenant.

Selon un mode de réalisation particulier, la mallette comprend au moins une partie de rangement adaptée pour réceptionner l'écran et/ou la console électronique, munie de moyens de maintien amovibles dudit écran et/ou de ladite console.

L'invention concerne également l'installation vidéo constituée d'une mallette telle que définie ci-dessus, dans l'une des parties de rangement de laquelle est positionné l'écran, et dans l'autre partie de rangement de laquelle est insérée la console électronique, ladite mallette intégrant également - au moins un cordon d'alimentation pour la liaison de la prise de connexion d'alimentation, notamment au secteur ou à la prise allume-cigares d'un véhicule automobile ou autre, ainsi qu'éventuellement - différents accessoires tels qu'une télécommande ou un casque audio par exemple.

Mais l'invention sera encore illustrée, sans être aucunement limitée, par la description suivante de modes de réalisation particuliers, donnés uniquement à titre d'exemples et représentés sur les dessins annexés dans lesquels :
- la figure 1 est une vue en perspective d'une mallette ou sacoche conforme à l'invention, comportant un système d'accrochage de type housse de revêtement pour la partie appui-tête d'un siège, illustrée ici en position fermée ;
- la figure 2 est une vue en perspective de la mallette représentée sur la figure 1, illustrée sous un autre angle et en position ouverte ;
- la figure 3 est une vue en perspective d'une mallette conforme à la présente invention comportant un système d'accrochage de type sangle;
- la figure 4 est une représentation schématique d'une mallette comportant un système d'accrochage de type bande(s) auto-agrippante(s), destinée(s) à coopérer avec un système de bande(s) auto-agrippante(s) complémentaire aménagé sur la face arrière de la partie appui-tête du siège ;
- la figure 5 est une vue en perspective d'une structure de mallette différente munie d'une housse permettant son accrochage sur la partie appui-tête du siège.

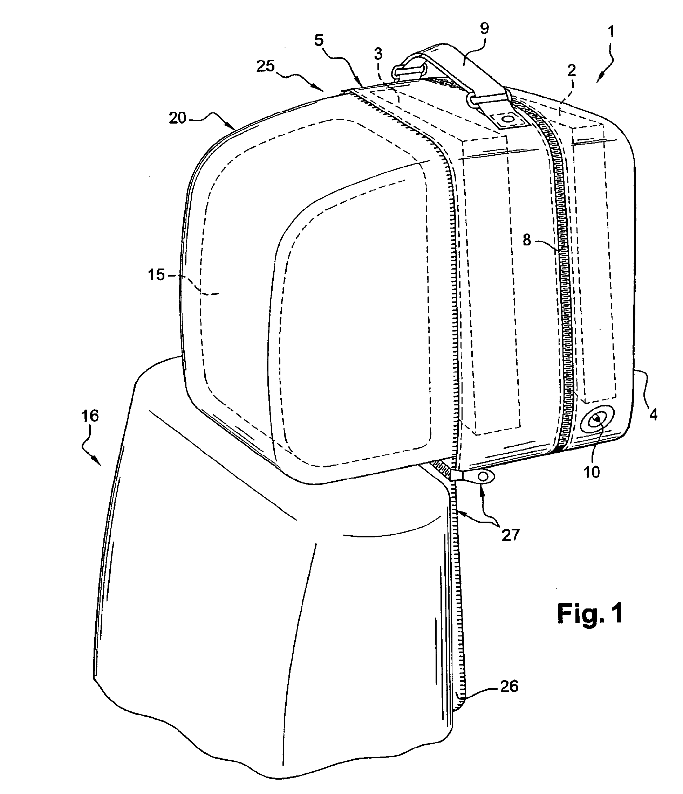

La mallette ou sacoche illustrée sur les figures 1 à 5 permet le rangement - d'une console électronique 2 qui se présente ici sous la forme d'un lecteur de disques DVD et - d'un écran associé 3 ; elle intègre également un précâblage interne destiné à la liaison entre le lecteur 2 et l'écran 3 en vue du visionnage des disques vidéo DVD.

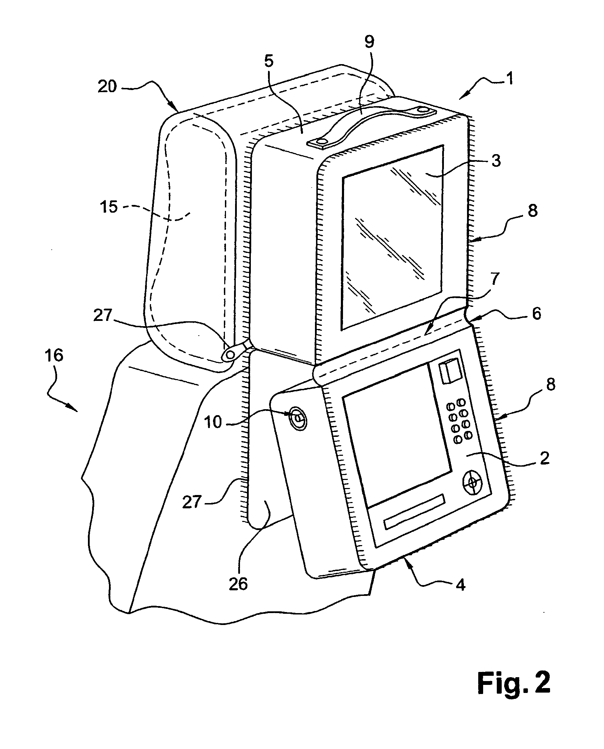

Cette mallette ou sacoche 1 comprend deux parties de rangement 4 et 5 indépendantes de forme générale parallélépipédique, reliées par un système de charnières 6 au niveau de la zone de fond. Ce système de charnières 6, dans un mode particulier de réalisation, comporte une fermeture à glissière 7 permettant une liaison amovible autorisant une désolidarisation de deux parties de rangement 4, 5, figure 2.

Ces parties de rangement 4, 5 sont en outre munies d'un système de fermeture à glissière 8 s'étendant sur les trois autres côtés de leur bordure périphérique, c'est-à-dire sur les côtés latéraux et sur la face avant.
La fermeture à glissière 8 permet un verrouillage amovible des deux parties de rangement 4 et 5 en position fermée, c'est-à-dire lorsque lesdites parties de rangement 4 et 5 sont en contact l'une avec l'autre par leur bordure périphérique.

L'enveloppe externe des deux parties de rangement 4 et 5 peut être réalisée en un matériau souple, genre tissu, matière plastique ou cuir par exemple.

On remarque également que la mallette 1 est équipée d'une poignée de préhension 9 aménagée sur la partie avant, c'est-à-dire sur le côté opposé à la charnière 6. Dans l'exemple de réalisation illustré, la poignée 9 est fixée sur la partie de rangement 5 adaptée pour réceptionner l'écran 3.

La face intérieure de la partie de rangement 4 est aménagée pour réceptionner la console 2 en forme de lecteur DVD ; la face intérieure de l'autre partie de rangement 5 est aménagée pour réceptionner l'écran 3.

Ces parties de rangement 4, 5 intègrent à cet effet des moyens connus permettant le maintien en position de la console 2 et de l'écran 3, de telle sorte que la face frontale de ces deux dispositifs électroniques 2, 3 soit visible lorsque la mallette est en position ouverte, figure 2.

A titre indicatif, les dispositifs électroniques 2, 3 peuvent comporter des organes complémentaires d'encliquetage permettant le verrouillage amovible desdits dispositifs 2, 3 au sein des parties de rangement adaptées.

Les câblages électriques (non représentés) permettant le fonctionnement de l'ensemble vidéo 2, 3 sont intégrés au sein de la structure de la mallette 1.
Sur les figures 1 et 2, on remarque la présence d'une prise de connexion d'alimentation 10 fixée sur l'enveloppe externe de la mallette, et en particulier pour le mode de réalisation illustré fixé sur la partie de rangement 4. Cette prise de connexion d'alimentation 10 permet le branchement de l'installation sur le secteur ou sur la prise allume-cigares d'un véhicule automobile, au moyen d'un cordon de connexion approprié muni d'une fiche amovible adaptée.
Les câbles intégrés qui assurent l'alimentation du lecteur DVD et de son écran associé s'étendent depuis la prise de connexion 10.
Le lecteur 2 et l'écran 3 sont en outre reliés par différents câbles destinés à assurer une liaison audio-vidéo.

Cette mallette comporte également des moyens qui permettent le maintien de la face externe de sa partie de rangement 5 adaptée pour réceptionner l'écran 3 plaquée contre la face arrière de la partie appui-tête 15 d'un siège 16, en particulier d'un siège de véhicule.
Selon la forme de réalisation représentée sur les figures 1 et 2, ce moyen de maintien consiste en un système d'accrochage de type housse 20 destinée à recouvrir la partie appui-tête 15 du siège 16.

Cette structure en forme de housse d'appui-tête 20 est aménagée de façon monobloc sur la face externe de la partie de rangement 5.
Elle peut être rangée dans une pochette complémentaire 25 par exemple en forme de pochette à soufflets, aménagée sur la surface externe de la partie de rangement 5, et obturée par un volet de fermeture 26. Cette pochette 25 peut être déployée par l'intermédiaire d'une fermeture à glissières 27, permettant de séparer ledit volet 26 de la face externe de la partie de rangement 5. Cette fermeture à glissières 27 peut s'étendre sur trois côtés dudit volet 26.

A titre seulement indicatif, le volet 26 est constitué d'un matériau souple sans cadre rigide, permettant de le replier au sein de la housse 20 lorsque celle-ci est en position sur l'appui-tête.

La mallette conforme à la présente invention en position ouverture, figure 2, une fois accrochée à l'appui-tête 15, offre un champ de visionnage large de l'écran 3, sans nécessiter de dissociation entre ledit écran 3 et sa partie de rangement 5, ni même de séparation entre les deux parties de rangement 4, 5.

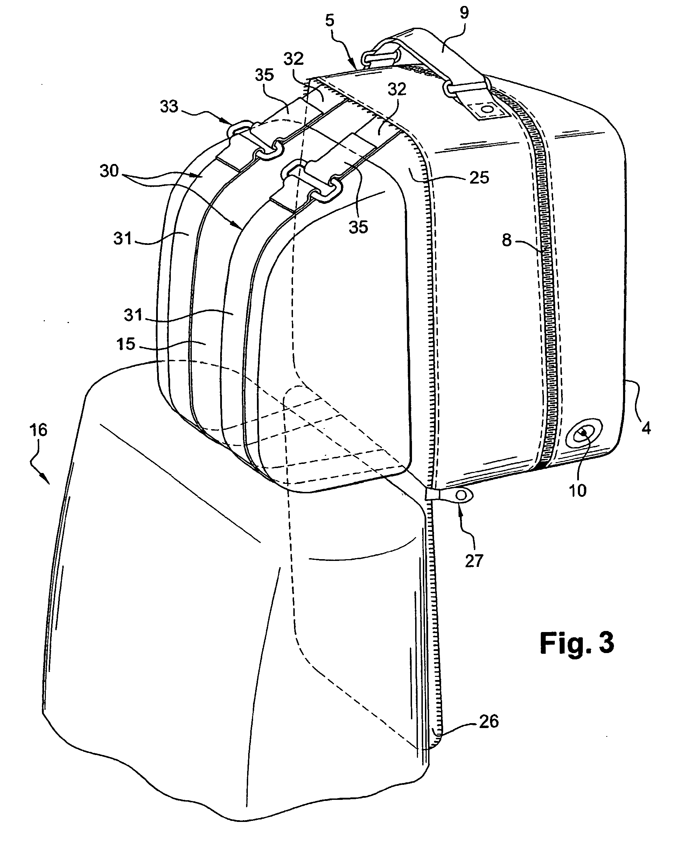

La figure 3 représente une autre forme de réalisation possible d'une mallette conforme à l'invention, dont le système d'accrochage est de type sangle(s) verticale(s).

Dans ce mode de réalisation, la mallette est munie, sur la face externe de la partie de rangement 5, de deux systèmes de sangles 30, ceinturant verticalement la partie appui-tête 15 du siège 16. Chaque système de sangle 30 est constitué de deux parties de sangle 31, 32 ; l'une desdites parties de sangle 31 est munie au niveau de son extrémité libre d'une boucle 33 et l'autre desdites parties de sangle 32 est munie au niveau de son extrémité libre d'une bande auto-agrippante 35 permettant de solidariser ladite partie de sangle 32 à ladite boucle 33.

Ce système de fixation par sangle(s) permet d'adapter la mallette sur différents calibres d'appui-tête par réglage de la tension de cerclage, au moyen notamment de la bande auto-agrippante 35 disposée sur la partie de sangle 32.
Tel que décrit dans le mode de réalisation précédent, ces systèmes de sangles 30 peuvent être rangés dans une pochette complémentaire 25 aménagée sur la face externe de la partie de rangement 5 de la mallette.

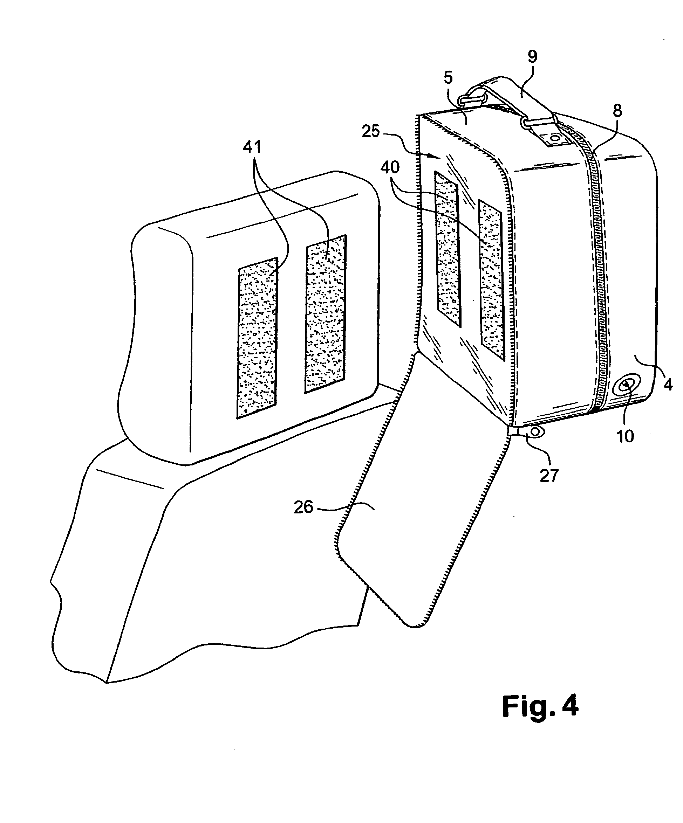

Selon encore une autre forme de réalisation possible, la mallette comporte un système d'accrochage consistant en une structure de type bande(s) auto-agrippante(s) aménagée pour partie sur la face externe de la mallette, et pour partie sur la face arrière de la partie appui-tête du siège.
Cette forme de réalisation, représentée figure 4, consiste en une structure de bande auto-agrippante 40 aménagée sur la face externe de la partie de rangement 5 ; cette structure de bande 40 peut être disposée au sein de la pochette complémentaire 25 précitée, mais elle peut aussi être disposée directement sur la face externe de la partie de rangement 5, en l'absence de cette pochette complémentaire 25.
La structure complémentaire de bande auto-agrippante 41 est aménagée sur la face arrière de la partie appui-tête 15 du siège 16. Elle peut être directement solidaire du revêtement de ladite partie appui-tête 15, par exemple par collage, couture ou autre, ou encore être disposée sur la partie appui-tête 15 au moyen d'une housse d'appui-tête amovible.

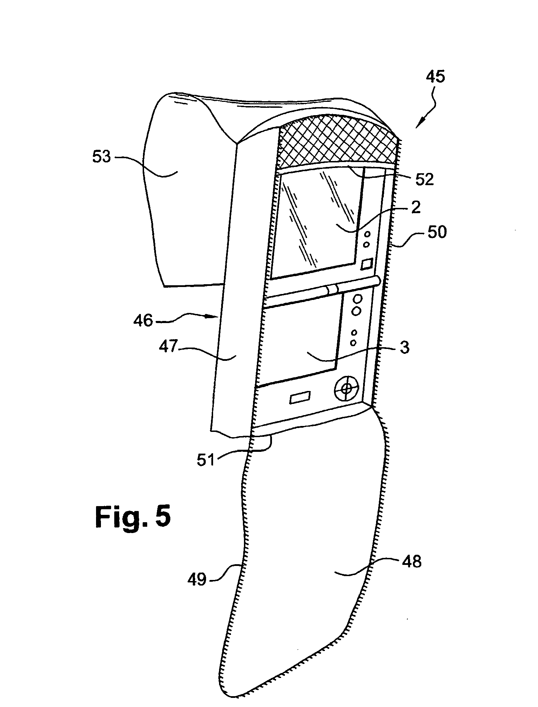

La figure 5 représente encore une forme alternative d'une mallette conforme à l'invention, comprenant deux parties de rangement juxtaposées, définissant un espace de rangement unique, et adaptées pour réceptionner un ensemble vidéo dont l'écran 2 et la console 3 sont attenants. Cet ensemble vidéo 2, 3 se présente ici sous la forme d'un ensemble monobloc, la console 2 et l'écran 3 étant reliés par un système de type charnière intégrée.

Cette mallette 45 est délimitée par un fond 46 et par une ceinture de parois latérales 47. Elle est réalisée en matériau souple, par exemple en tissu ou en matière synthétique. Les parois latérales 47 peuvent éventuellement être renforcées par la mise en place d'une ceinture rigide contre la face interne desdites parois.
Elle comporte en outre un volet 48 permettant la fermeture de la mallette 45, et ainsi empêcher l'accès à l'ensemble vidéo. Ce volet 48 est muni sur trois de ses côtés d'un système de fermeture à glissière 49, complémentaire d'un système 50 aménagé sur les trois bordures supérieures en vis-à-vis des parois latérales 47 ; le dernier côté 51 dépourvu de fermeture à glissière forme un système de charnière entre le couvercle 48 et la bordure libre d'une des parois latérales 47.

L'ensemble vidéo 2, 3 est maintenu dans la mallette 45 par tout moyen adapté.
A cet effet, la face interne du fond 46 peut être munie d'un système de bande auto-agrippante destinée à coopérer avec une bande complémentaire aménagée sur la face arrière de la console 2 ; la mallette 45 peut également comporter une bande élastique 52 destinée à ceinturer l'extrémité supérieure de l'écran 3. Il est alors possible d'intégrer ou de retirer rapidement l'ensemble vidéo 2, 3 de la mallette 45.

Conformément à l'invention, la mallette 45 est munie d'un système d'accrochage permettant le maintien de la face externe du fond 46 plaquée contre la face arrière de l'appui-tête du siège. Ce système d'accrochage consiste ici en une structure 53 en forme de housse d'appui-tête, laquelle housse 53 est solidarisée sur la face externe du fond 46 par tout moyen adapté, et notamment par couture ou collage.

Les mallettes décrites ci-dessus permettent la réception d'une console électronique et de son écran associé ; l'installation vidéo obtenue peut être mise en oeuvre dans tout endroit disposant d'une source d'alimentation électrique appropriée.

On notera que le système d'accrochage des mallettes conformes à la présente invention peut tout aussi bien être mis en oeuvre sur la partie supérieure d'un dossier de siège monobloc contre laquelle est destinée à venir appuyer la tête de l'utilisateur.

## Revendications

1. Mallette de réception pour un ensemble vidéo (2, 3) comprenant une console électronique (2), genre lecteur vidéo ou console de jeux, et l'écran indépendant associé (3), destinée à être fixée sur la face arrière d'un siège,
laquelle mallette comprend une partie de rangement (5; 46, 47) adaptée pour réceptionner ledit écran (3), avec sa face frontale visible lorsque la mallette est en position ouverte, une partie de rangement (4; 46, 47) adaptée pour réceptionner ladite console électronique (2), et
un système d'accrochage (20; 30; 53) qui permet le maintien de la mallette contre la face arrière dudit siège,
lesdites parties de rangement (4, 5; 46, 47) étant chacune associées à des moyens (7, 8 ; 48, 49) qui permettent leur verrouillage amovible en position fermée, lesdites parties de rangement (4, 5; 46, 47) étant reliées par un système de charnière (6),
ladite mallette comprenant en outre au moins une prise (10) de connexion d'alimentation, aménagée sur l'une desdites parties de rangement (4, 5; 46, 47) à partir de laquelle s'étend un câblage interne d'alimentation destiné à être connecté sur ledit écran (3) et ladite console (2) et un système de câblage interne pour la liaison audio-vidéo entre ladite console (2) et ledit écran (3),
**caractérisée en ce que** ledit système d'accrochage (20; -53) consiste en une housse d'appui-tête (20, 53) adapté pour permettre le maintien de la face externe de la partie de rangement (5; 46, 47) adaptée pour réceptionner ledit écran (3) plaquée contre la face arrière de la partie appui-tête dudit siège, et
**en ce que** la mallette comporte une poche complémentaire (25) destinée à permettre le rangement de ladite housse d'appui-tête (20, 53), ladite poche complémentaire (25) étant aménagée sur ladite face externe de la partie de rangement (5; 46, 47) et obturée par un volet de fermeture (26).

2. Mallette selon la revendication 1, **caractérisée en ce qu'**elle comprend une partie de rangement d'écran (5) solidaire d'une partie de rangement de console (4) par un moyen de liaison (7) amovible en autorisant une désolidarisation.

3. Mallette selon l'une quelconque des revendications 1 à 2, **caractérisée en ce qu'**elle comprend deux parties de rangement juxtaposées (46, 47), formant un espace de rangement unique, destiné à contenir la console électronique (2) et l'écran associé (3) attenant.

4. Mallette selon l'une quelconque des revendications 1 à 3, **caractérisée en ce qu'**elle comprend une partie (4, 5; 46; 47) de rangement d'écran (3) et/ou de console (2) munie de moyens de maintien (7) amovibles dudit écran (3) et de ladite console (2).

5. L'installation vidéo constituée d'une mallette selon l'une quelconque des revendications 1 à 4, dans les parties de rangement de laquelle sont positionnés l'écran (3) et la console électronique (2), ladite mallette intégrant également au moins un cordon d'alimentation pour la liaison de la prise de connexion d'alimentation notamment au secteur ou à la prise allume-cigares d'un véhicule automobile.

## Claims

1. A receiving case for a video unit (2,3) comprising an electronic console (2), such as a video reader or a play station, and the associated independent screen (3), intended to be attached to the rear face of a seat, which case comprises a stowing section (5; 46, 47) adapted to accommodate said screen (3), with its front face visible when the case is in open position, a stowing section (4; 46, 47) adapted to accommodate said electronic console (2), and
a fastening system (20; 30; 53) which enables to hold the receiving case against the rear face of said seat,
said stowing sections (4,5; 46, 47) being each associated with means (7, 8; 48, 49) enabling their removable locking in closed position, said stowing sections (4, 5; 46, 47) being interconnected by means of a hinged system (6),
said receiving case further comprising at least one power supply socket (10) provided on one of said stowing sections (4, 5; 46, 47) from which extends an internal power supply cabling intended for connection to said screen (3) and said console (2), and an internal cabling system for the audio-video link between said console (2) and said screen (3),
**characterized in that** the fastening system (20; 53) consists of a head-rest protective cover (20; 53) adapted to allow the external face of the stowing section (5; 46, 47) adapted to accommodate said screen (3) so be held tight against the rear face of the head-rest section of said seat, and
**in that** the receiving case comprises an additional pocket (25) intended for stowing said head-rest protective cover (20; 53), said additional pocket (25) being provided on said external face of the stowing section (5; 46, 47) and blanked off by a closing flap (26).

2. A case according to claim 1, **characterized in that** it comprises a screen stowing section (5) interconnected with a console stowing section (4) by a removable linking means (7) which enables disconnection of both sections (4, 5).

3. A case according to any of the claims 1 to 2, **characterized in that** it comprises two juxtaposed stowing sections (46, 47), forming a single stowing space, intended to contain the electronic console (2) and the adjoining associated screen (3).

4. A case according to any of the claims 1 to 3, **characterized in that** it comprises a screen (3) and/or console (2) stowing section (4; 5; 46, 47) fitted with removable holding means (7) for said screen (3) and said console (2).

5. A video unit composed of a case according to any of the claims 1 to 4 in the stowing sections whereof are positioned the screen (3) and the electronic console (2), whereas said case also integrates at least one power supply cable for connecting the power supply socket to the mains or to the cigarette-lighter socket of an automotive vehicle.

## Patentansprüche

1. Aufnahmetasche für ein Videogerät (2, 3), umfassend eine elektronische Konsole (2) von der Art eines Videolesegeräts oder einer Spielkonsole und den dazugehörigen unabhängigen Bildschirm (3), der dazu gedacht ist, auf der Rückseite eines Sitzes befestigt zu werden,
wobei diese Aufnahmetasche einen Aufbewahrungsteil (5; 46, 47), der dazu geeignet ist, den Bildschirm (3) aufzunehmen, so dass seine Vorderseite sichtbar ist, wenn die Aufnahmetasche sich in einer geöffneten Position befindet, sowie einen Aufbewahrungsteil (4; 46, 47), der dazu geeignet ist, die elektronische Konsole (2) aufzunehmen, umfasst, und
ein Aufhängsystem (20; 30; 53), das es ermöglicht, die Aufnahmetasche an der Rückseite des Sitzes festzuhalten,
wobei die Aufbewahrungsteile (4, 5; 46, 47) jeweils Mitteln (7, 8; 48, 49) zugeordnet sind, die es ermöglichen, sie in einer geschlossenen Position zu verriegeln, wobei die Aufbewahrungsteile (4, 5; 46, 47) über ein Scharniersystem (6) verbunden sind,
wobei die Aufnahmetasche außerdem mindestens einen Stromanschluss (10) umfasst, der auf einem der Aufbewahrungsteile (4, 5; 46, 47) eingerichtet ist und von dem aus sich eine interne Versorgungsverkabelung, die dazu gedacht ist, an den Bildschirm (3) und an die Konsole (2) angeschlossen zu werden, und ein internes Verkabelungssystem für die audiovisuelle Verbindung zwischen der Konsole (2) und dem Bildschirm (3) erstrecken,
**dadurch gekennzeichnet, dass** das Aufhängsystem (20; 53) aus einem Kopfstützenbezug (20, 53) besteht, der dazu geeignet ist, das Festhalten der Außenseite des Aufbewahrungsteils (5; 46, 47) zu ermöglichen, der dazu geeignet ist, um den Bildschirm (3) aufzunehmen, der an die Rückseite des Kopfstützenteils des Sitzes angedrückt wird, und
dass die Aufnahmetasche eine ergänzende Tasche (25) umfasst, die dazu gedacht ist, die Aufbewahrung des Kopfstützenbezugs (20, 53) zu ermöglichen, wobei die ergänzende Tasche (25) auf der Außenseite des Aufbewahrungsteils (5; 46, 47) eingerichtet ist und von einer Verschlussklappe (26) verschlossen wird.

2. Aufnahmetasche nach Anspruch 1, **dadurch gekennzeichnet, dass** sie einen Teil (5) zur Aufbewahrung des Bildschirms umfasst, der mit einem Teil (4) zur Aufbewahrung der Konsole über ein Verbindungsmittel (7) fest verbunden ist, das abnehmbar ist und dabei eine Trennung ermöglicht.

3. Aufnahmetasche nach einem der Ansprüche 1 bis 2, **dadurch gekennzeichnet, dass** sie zwei nebeneinander liegende Aufbewahrungzteile (46, 47) umfasst, die einen einzigen Aufbewahrungsraum bilden, der dazu gedacht ist, die elektronische Konsole (2) und den dazugehörigen angrenzenden Bildschirm (3) zu enthalten.

4. Aufnahmetasche nach einem der Ansprüche 1 bis 3, **dadurch gekennzeichnet, dass** sie einen Teil (4, 5; 46; 47) zum Aufbewahren des Bildschirms (3) und/oder der Konsole (2) umfasst, der mit abnehmbaren Mitteln (7) zum Festhalten des Bildschirms (3) und der Konsole (2) versehen ist.

5. Videoeinrichtung, bestehend aus einer Aufnahmetasche nach einem der vorhergehenden Ansprüche 1 bis 4, wobei in ihren Aufbewahrungsteilen der Bildschirm (3) und die elektronische Konsole (2) angeordnet sind, wobei die Aufnahmetasche auch mindestens ein Stromkabel umfasst für die Verbindung des Stromanschlusses insbesondere mit dem Stromnetz oder mit einem Zigarrenanzünder eines Kraftfahrzeugs.
